# EUROPÄISCHE PATENTANMELDUNG

(11) **EP 3 473 096 A1**
(43) Veröffentlichungstag der Anmeldung: **24.04.2019**
(21) Anmeldenummer: 17196777.1
(22) Anmeldetag: 17.10.2017
(51) Int. Cl.: A01N 25/34, A01N 65/06

(54) **KÖRPERKONTAKTELEMENT MIT ANTIBAKTERIELLER UND ANTIMIKROBIELLER WIRKUNG**

(71) Anmelder: Ayvazian, Araik, 06846 Dessau (DE)
(72) Erfinder: Ayvazian, Araik, 06846 Dessau (DE)
(74) Vertreter: Weilnau, Carsten

(57) **Zusammenfassung**

Die vorliegende Erfindung betrifft ein Körperkontaktelement mit einem Grundkörper (102; 202; 302; 402) und einer Außenoberfläche (104; 204; 304; 404), wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

## Beschreibung

Die vorliegende Erfindung betrifft ein Körperkontaktelement, beispielsweise in Form eines Tür- oder Fenstergriffs, eines Toilettensitzes, einer Sanitärgarnitur, eines Griffs, eines Einkaufswagengriffs, eines Geländer-Handlaufs, eines Lichtschalters, eines Toilettenspülknopfs, eines Handtuchhalters, einer Tischdecke, eines Sitzbezugs, eines Lenkrads, eines Schalthebels, als Schreibgerät oder in Form einer Armlehne mit antibakterieller oder antimikrobieller Wirkung.

### Hintergrund

Für die Einhaltung hygienischer Standards, insbesondere zur Vermeidung der unkontrollierten Ausbreitung von Infektionskrankheiten sowie Bakterien ist es erstrebenswert Produkte des täglichen Bedarfs bereitzustellen, die eine antibakterielle oder keimtötende Wirkung aufweisen. So ist beispielsweise aus der DE 20 2016 102 964 U1 ein antibakterielles, korrosionsverhütendes Verbundmaterial bekannt, welches einen Substratkörper und eine antibakterielle, korrosionsverhütende Schicht aufweist, die auf einer Oberfläche des Substratkörpers aufgebracht ist. Im täglichen Gebrauch kann die an der Oberfläche des Substratkörpers vorgesehene Schicht jedoch gewissen Abnutzungserscheinungen unterliegen. Als keimtötender Wirkstoff fungieren hierbei Nanopartikel, wie beispielsweise Nano Zink.

Eine keimtötende Wirkung ist ferner für Edelmetalle bzw. Edelmetallionen, wie beispielsweise für Silberionen bekannt. Derartige Wirkstoffe zur Keimabtötung sind allerdings mitunter schädlich für die Umwelt als auch für die Endanwender.

Es ist demgegenüber Zielsetzung der vorliegenden Erfindung, Gegenstände des täglichen Gebrauchs, insbesondere solche Gegenstände, die mit einer Vielzahl von Personen in Berührung kommen, mit einer antibakteriellen oder antimikrobiellen Wirkung auszustatten, wobei die Gegenstände und/oder ein keimabtötender Wirkstoff eine verbesserte Umweltverträglichkeit und eine besonders gute Ökobilanz aufweisen sollen. Die Gegenstände und/oder der Wirkstoff sollen ferner gesundheitlich unbedenklich sein. Sie sollen zudem eine umweltverträgliche Entsorgung nach Gebrauch ermöglichen.

### Erfindung und vorteilhafte Ausgestaltungen

Diese Aufgabe wird mit einem Körperkontaktelement gemäß Patentanspruch 1 gelöst, wobei vorteilhafte Ausgestaltungen Gegenstand jeweils abhängiger Ansprüche sind.

Insoweit ist ein Körperkontaktelement mit einem Grundkörper und mit einer Außenoberfläche vorgesehen, wobei die Außenoberfläche mit einem antibakteriellen und/oder antimikrobiellen Wirkstoff versehen oder versetzt ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

Unter einem Körperkontaktelement im Sinne der vorliegenden Offenbarung sind typischerweise Gegenstände zu verstehen, die bei bestimmungsgemäßem Gebrauch mit einem Lebewesen, etwa einem Mensch oder einem Tier in Körperkontakt oder Hautkontakt, d. h. in mechanischen Kontakt oder in Berührung gelangen. Das Körperkontaktelement kann auf unterschiedliche Art und Weise ausgestaltet sein. Es kann ein Griffelement sein, welches von einer Hand eines Nutzers zumindest abschnittsweise ergreifbar ist. Es kann sich auch um ein Sitzelement handeln, welches z.B. mit einem Bein, einem Arm oder mit dem Gesäß in direkten Hautkontakt gelangt.

Konkret kann es sich bei dem Körperkontaktelement um einen Türgriff oder Fenstergriff, um eine Türklinke, um einen Toilettensitz oder eine Toilettenbrille, einen Toilettendeckel, eine Toilettenbürste, einen Geländer-Handlauf, einen Lichtschalter, einen Toilettenspülknopf, einen Handtuchhalter, eine Tischdecke, einen Sitzbezug oder um eine Armlehne handeln. Diese Aufzählung von Körperkontaktelementen im Sinne der vorliegenden Offenbarung zeichnen sich insbesondere dadurch aus, dass sie zum Beispiel im öffentlichen Bereich angeordnet sind und bei bestimmungsgemäßem Gebrauch mit einer Vielzahl unterschiedlicher Lebewesen in direkten Hautkontakt gelangen.

Das Körperkontaktelement kann insoweit als Berührungskörper oder Berührgegenstand ausgestaltet sein. Das Körperkontaktelement kann ferner als Hautkontaktelement oder als Hautkontaktvorrichtung ausgebildet sein. Das Körperkontaktelement kann insbesondere ein Hautkontaktelement sein. Die Außenoberfläche des Körperkontaktelements, welche mit dem antibakteriellen und/oder antimikrobiellen Wirkstoff versehen ist, zeichnet sich durch eine besonders gute Umweltverträglichkeit als auch durch eine besondere gute Biokompatibilität aus. Der antibakterielle oder antimikrobielle Wirkstoff ist biologisch abbaubar und gesundheitlich unbedenklich. Die Außenoberfläche des Körperkontaktelements kann sich durch eine natürliche, antibakterielle Wirkung auszeichnen. Sie ermöglicht eine ökologische und nachhaltige Herstellung, Produktion sowie Entsorgung des Körperkontaktelements.

Zugleich weist die Außenoberfläche eine für den Endanwender angenehme Haptik und/oder eine unverwechselbare Optik auf. Sie ist ferner in sämtlichen denkbaren Farben herstellbar.

Das Körperkontaktelement, insbesondere seine Außenoberfläche ist gänzlich frei von Metallionen, Metallsalzen, Nanopartikeln ggf. auch frei von synthetischen keimabtötenden Wirkstoffen. Als Wirkstoffe kommen die bereits genannten Stoffe oder Stoffgruppen, nämlich: Stilbene, Flavonoide, Lignane, Harzsäuren oder Terpene oder hieraus gebildete Mischungen bzw. Kombinationen infrage.

Stilbene sind sekundäre Pflanzenstoffe mit 2 hydroxylierten aromatischen Ringen, die über eine (-CH=C-)-Brücke verbunden sind. Grundgerüst ist das Stilben, das durch die Stilben-Synthase aus 3 Molekülen Malonyl-Coenzym A und 1 Molekül p-Cumaryl-Coenzym A unter Abspaltung von 4 Molekülen CO₂ synthetisiert wird. Durch intramolekulare oxidative Kupplung können aus Stilbenen entsprechend substituierte Phenanthrene gebildet werden. Diese und die durch Di-, Tri- und Tetramerisierung entstehenden Oligostilbene haben eine sehr hohe fungistatische Wirkung. Von großer medizinischer Bedeutung ist das Resveratrol, das vor allem in Rotwein enthalten ist und Gefäßkrankheiten vorbeugt und auch die Bildung von Lungenkarzinomen unterdrücken soll. Die dem menschlichen Auge unsichtbare UV-A-Strahlung (Ultraviolett) wird von Stilben absorbiert und als bläuliche Fluoreszenzstrahlung (Fluoreszenz) wieder abgegeben.

Im hier beschriebenen antibakteriellen und/oder antimikrobiellen Wirkstoff sind Stilbene insbesonde in Form von 1 Pinosylvin, Pinosylvin-MME und/oder Pinosylvin-DME enthalten.

Flavonoide sind ebenfalls sekundäre Pflanzenstoffe mit dem C₆C₃C₆-Grundgerüst des Flavans, die weit verbreitet meist in glykosidisch gebundener Form auftreten. Bei den meisten Flavonoiden liegt dieses Grundgerüst in Form eines Phenylchromanringsystems vor; die Phenylgruppe ist entweder an Position 2 (normale Flavonoide), 3 (Isoflavonoide) oder 4 (Neoflavonoide) des Pyranrings gebunden. Von ersten Biosyntheseschritten führen Verzweigungen auch zu anderen Phenylpropylverbindungen, z.B. Cumarin, Lignanen, Lignin, Derivaten der Benzoesäure oder aromatischen Estern. Die ersten in der Pflanze gebildeten Flavonoide sind die Chalkone (die außerdem die Vorstufen der Stilbene bilden), von denen sich die weiteren Flavonoide, die Aurone, Flavone, Flavonole, Isoflavone, Flavanone, Flavanonole, Catechine, Anthocyanidine (Anthocyane) und Leukoanthocyanidine sowie i.w.S. auch Rotenoide und Pterocarpane ableiten. Die einzelnen Gruppen unterscheiden sich im Oxidationsgrad ihres zentralen Pyranrings (Ringsysteme), die Vertreter einer Gruppe wiederum in der variierenden Zahl und Anordnung der Hydroxyl- und Alkylsubstituenten und der unterschiedlichen Art, Zahl und Stellung von Zuckerresten (ca. 2000 verschiedene Strukturen sind bisher bekannt). Die verschiedenen Hydroxylierungs- und Alkylierungsmuster der Flavonoide können in einer frühen Stufe eingeführt werden (z.B. Hydroxylierung von Cumaroyl-CoA zu Kaffeeoyl-CoA und O-Methylierung von Kaffeeoyl-CoA zu Feruloyl-CoA), meist jedoch finden Hydroxylierung, Alkylierung und Glykosylierung auf verschiedenen Stufen nach der Bildung des Flavonoidringsystems statt. Neben ihrer Funktion als Blütenfarbstoffe besitzen Flavonoide bei Pflanzen noch eine große Bedeutung als UV-Schutz und zur Abwehr (pflanzliche Abwehr) von Parasiten und Krankheitserregern.

Darüber hinaus spielen sie eine bedeutende Rolle bei der Symbiose zwischen Pflanzen und Pilzen oder Bakterien, wobei sie als chemische Lockstoffe wirken (chemische Ökologie, Ökomone). Als Bioflavonoide (früher Vitamin-P-Faktoren genannt) bezeichnet man die Citrus-Flavonoide Rutin, Hesperidin, Naringin, Eriocitrin und deren Derivate.

Im hier beschriebenen antibakteriellen und/oder antimikrobiellen Wirkstoff sind Flavonoide insbesondere in Form von 2 Pinocembrin und/oder 3 Chrysin enthalten.

Lignane sind eine Stoffgruppe, die als Naturstoff in Pflanzen vorkommen, z. B. in der Taigawurzel, in der Baldrianwurzel und in verschiedenen essbaren Pflanzenteilen wie z. B. Lein- und Sesamsamen, Getreidekörnern, Früchten und Gemüse. Lignane sind farblose, kristalline und geruchlose Verbindungen. Sie gehören zur Oberklasse der Phytoöstrogene, östrogenähnliche Stoffe, die auch als Antioxidantien wirken. Die sogenannten Enterolignane sind Stoffwechselprodukte, die im menschlichen Darm durch den bakteriellen Abbau der pflanzlichen Lignane entstehen. Lignane zeichnen sich durch dimere C₆C₃-Körper (Phenylpropanoide) aus, die über das mittlere (β)-C-Atom verbunden sind. Unterschiedliche Strukturvarianten ergeben sich durch Anordnung und Verknüpfung der C₃-Seitenketten.

In Pflanzen kommen Lignane in der Regel frei oder glykosidisch gebunden vor. Durch Polymerisation der C₆C₃-Körper (= Monolignole) entsteht das sogenannte Lignin, das in der pflanzlichen Zellwand vorkommt und für die Verholzung der Pflanzenzellen sorgt. Lignin zählt zur Gruppe der unlöslichen Ballaststoffe. In Pflanzen fungieren Lignane offenbar als Abwehrstoffe gegen Erkrankungen und Infektionen und scheinen auch eine Kontrolle über das Pflanzenwachstum auszuüben. Für den Menschen sind pflanzliche Lignane auch aus ernährungswissenschaftlicher Sicht interessant: Aufgrund ihrer östrogenartigen Wirkungen und anderer biochemischer Eigenschaften sind sie möglicherweise für die Vorbeugung gegen Herz-Kreislauferkrankungen und andere chronische Erkrankungen von Bedeutung. Des Weiteren werden Lignane als pflanzliche Sedativa eingesetzt. Die schlaffördernden Wirkungen haben ihnen auch die Bezeichnung als "Schlaflignane" eingebracht.

Im hier beschriebenen antibakteriellen und/oder antimikrobiellen Wirkstoff sind Lignane insbesonde in Form von Pinoresinol, Nortrachelogenin oder Hydroxymatairesinol enthalten.

Harzsäuren oder Resinosäuren, früher auch Resinolsäuren, ist die Bezeichnung für eine stark heterogene Gruppe von Carbonsäuren, die die Hauptbestandteile der natürlichen Harze bilden. Ihre Salze nennt man Harzseifen oder auch Resinate. Sie basieren abhängig von der Rohstoffquelle häufig auf Terpenen, es kommen aber auch aromatische Carbonsäuren vor. Sie werden in den Pflanzen in speziellen Strukturen produziert und gespeichert und zählen zu den sekundären Naturstoffen. Harzsäuren haben vielfältige Funktionen in den Pflanzen, unter anderem als Schutz gegen Schädlinge, mechanische Schäden und klimatische Schwankungen.
In unseren Breiten kommen Harzsäuren vor allem in Coniferenharzen vor und gehören zur Gruppe der Diterpene. Kiefern enthalten zahlreiche von Parenchymgewebe umgebene radiale und vertikale Kanäle, die das Holz durchziehen, und in denen sich das Harz sammelt. Dabei sammelt sich das Harz im Laufe der Zeit vermehrt im Kernholz und im Splintholz, bei ersterem vermehrt im unteren Teil des Stammes, während die Harzmenge im Splintholz mit der Höhe des Baumes zunimmt. Tritepernharzsäuren kommen zum Beispiel in Elemi, Dammar und Mastix, aromatische Säuren in Tolubalsam und Weihrauch vor.

Harzsäuren werden an verschiedenen Orten innerhalb der Pflanze synthetisiert sowie gespeichert und bei Bedarf über Kanäle nach außen transportiert. Ihre Biosynthese ist Teil des sekundären Stoffwechsels der Pflanzen, wobei es zwei verschiedene Synthesewege gibt. Terpene werden über den Mevalonatweg im endoplasmatischen Retikulum und den MEP-Weg in den Plastiden synthetisiert, aromatische Harzsäuren über den Shikimisäureweg. Harzsäuren haben alicyclische Strukturen und tragen neben der Carboxygruppe oft noch andere funktionelle Gruppen wie Hydroxy-, Keto-, Aldehydgruppen oder Carbonsäureester. Sie sind schlecht in Wasser aber gut in polaren organischen Lösungsmitteln wie Chloroform oder Diethylether löslich. Im Harzgemisch liegen sie meist in Säureform, gelegentlich aber auch als Ester vor. Sie sind zum Teil sehr gut kristallisierbar und schmelzen im Bereich 130-200 °C. Mit Basen (Natron-, Kalilauge, Calciumhydroxid) bilden sie Resinate.

Neben den für die Industrie bedeutenden Harzsäuren der Koniferen, die meist die Summenformel C₂₀H₃₀O₂ (Diterpensäuren) haben, kommen auch Triterpensäuren und Benzoe- und Zimtsäurederivate vor. Gemeinsam haben sie ihr Vorkommen in natürlichen Harzen und ihre Herkunft aus dem sekundären Stoffwechsel der Pflanzen.

Dabei gilt im Allgemeinen, dass Harzsäuren unterschiedlicher botanischer Herkunft auch aus unterschiedlichen chemischen Gruppen stammen.
Der hier vorgesehene antibakterielle und/oder anitmikrobielle Wirkstoff kann Diterpene enthalten. Hierzu zählen: Abietane, wie z.B Abietinsäure, Neoabietinsäure, Levopimarsäure, Palustrinsäure oder Dehydroabietinsäure; Pimarane und Isopimarane, wie z.B. Pimarsäure, Sandaracopimarsäure oder Podocarpinsäure; Labdane, wie z.B. Copalsäure, Eperuesäure, Labdanolsäure, Polyalthinsäure oder Pinifolsäure.

Der hier vorgesehene antibakterielle und/oder anitmikrobielle Wirkstoff kann ferner Triterpene enthalten. Hierzu zählen: Dammarane, wie z.B. Dammarolsäure; Tirucallane, wie z.B. (Iso)-Masticadienonsäure, Elemolsäure oder Elemonsäure; Oleanane, wie z.B. Oleanonsäure, Oleanolsäure, Moronsäure, oder α-Boswelliasäure; Ursane, wie z.B. Ursolsäure, Ursonsäure, oder β-Boswelliasäure und Lupane, wie z.B. Lupeolsäure

Verschiedene infrage kommende Harze enthalten ferner die aromatischen Säuren Zimtsäure (Akaroidharz) und Benzoesäure (Benzoe, Weihrauch, Tolubalsam, Perubalsam) sowie die Benzyl- und andere Ester dieser Säuren.

Im hier beschriebenen antibakteriellen und/oder antimikrobiellen Wirkstoff sind Harzsäuren z.B. in Form von 4 Abietic acid und/oder Pimaric acid enthalten. Terpene können in Form von aliphatischen, mono-, di-, oder trizyklischen Terpenen im antibakteriellen und/oder antimikrobiellen Wirkstoff enthalten sein. Auch kann der Wirkstoff acyclische Kohlenwasserstoff-Monoterpene, wie z.B.
Myrcen, Ocimen und Cosmen enthalten. Der Wirkstoff kann zudem monocyclische und/oder bicyclische Monoterpene, wie z.B. Bicyclen Caran, Thujan, Pinan, Fenchan aufweisen. Der Wirkstoff kann zudem acyclische, monocyclische und/oder polycyclische Sesquiterpene enthalten.

Monoterpene sind im Pflanzenreich weit verbreitet. Sie können aus dem zerkleinerten Pflanzenmaterial durch Extraktion mit unpolaren oder wenig polaren Lösungsmitteln oder durch Wasserdampfdestillation gewonnen werden. Der stärkste bekannte Aromastoff ist das Monoterpen p-Menth-1-en-8-thiol (Menthentiol), der Geruchstoff des Grapefruitsaftes. Durch den Einbau von Stickstoff erhält man die Monoterpenalkaloide (z.B. Nuphara-Alkaloide).

Monoterpene können aus Geranylpyrophosphat (Terpene) bzw. dem durch Isomerisierung daraus entstehenden Nerylpyrophosphat gebildet werden. Die aliphatischen Monoterpene entstehen durch Hydrolyse der Phosphatbindung bzw. Elimination von Pyrophosphorsäure (Bildung des 3,7-Dimethyloctantyps); zyklische Monoterpene werden gewöhnlich durch nucleophile Substitution am C-Atom 1 des Geranylpyrophosphats unter Abspaltung von Pyrophosphorsäure aufgebaut, wobei man die o.a. Strukturtypen unterscheidet. Durch reduktive Zyklisierung entstehen iridoide Verbindungen.

Im hier beschriebenen antibakteriellen und/oder antimikrobiellen Wirkstoff sind Terpene insbesondere Monterpene enthalten. Diese können in Form von α-Pinen, β-Pinen oder γ-Pinen sowie in Form von 3-Carene enthalten sein.

Nach einer Weiterbildung enthält der antibakterielle und/oder antimikrobielle Wirkstoff Kiefernnadelöl und/oder Kieferkernholz. Er kann auch vollständig hieraus gebildet sein oder daraus bestehen. Kiefernnadelöl und/oder Kieferkernholz sind vergleichsweise kostengünstig und nachhaltig produzierbar. Auch erweist sich die Verarbeitung von Kiefernnadelöl und/oder Kieferkernholz als vergleichsweise ressourcenschonend und kostengünstig.

Der Wirkstoff kann z.B. aus der Familie der Pinaceae gewonnen werden, welche zur Unterklasse der Coniferae, d.h. der Nadelhölzer zählen. Der Wirkstoff kann insbesondere auch aus Kiefernnadelöl, Kieferkernholz oder aus einem hieraus gebildeten Stoffgemisch bestehen. Die Zusammensetzung des Kiefernnadelöls ist typischerweise von Monoterpenkohlenwasserstoffen bestimmt. Der Wirkstoff, z.B. in Form von Kiefernnadelöl kann neben den Monoterpenkohlenwasserstoffen auch Terpenalkohole und entsprechende Ester aufweisen. Insbesondere kann der Wirkstoff Pini Etheroleum aufweisen, welches durch Wasserdampfdestillation aus den frischen Nadeln, Zweigspitzen oder frischen Ästen von Pinus Silvestris L. oder anderen Arten der Gattung Pinus gewonnen wird.

Als Wirkstoff können sowohl ein ätherisches Öl, wie zum Beispiel Kiefernnadelöl, aber auch ein Zwischenprodukt der Gewinnung des betreffenden ätherischen Öls, so zum Beispiel Kiefernholz oder Kiefernnadeln verwendet werden. Der Wirkstoff bzw. dessen Terpene können dabei in Holzfasern gebunden sein und im fasergebundenen Zustand als Wirkstoff zumindest an der Außenoberfläche des Körperkontaktelements angeordnet sein. Der Wirkstoff kann ferner in die Außenoberfläche integriert oder eingebettet sein.

Nach einer weiteren Ausgestaltung ist die Außenoberfläche eine Außenoberfläche des Grundkörpers oder sie bildet eine Außenfläche des Grundkörpers. Mithin können der Grundkörper und die Außenoberfläche einstückig ausgestaltet sein. Bei dem Körperkontaktelement kann es sich um ein einteiliges Bauteil, bzw. um ein einteiliges Körperkontaktelement handeln. Die Außenoberfläche und der Grundkörper können dabei eine im Wesentlichen identische stoffliche Zusammensetzung aufweisen. Es ist hierbei denkbar, dass lediglich die Außenoberfläche des einteiligen Grundkörpers mit dem Wirkstoff versehen ist. Der Grundkörper und seine Außenoberfläche können dabei auch unterschiedliche stoffliche Zusammensetzungen aufweisen. So kann der Grundkörper räumlich betrachtet eine inhomogene stoffliche Zusammensetzung aufweisen. An der Außenoberfläche kann er einen höheren Wirkstoffanteil als im Inneren des Grundkörpers aufweisen.

Nach einer weiteren Ausgestaltung ist der Wirkstoff homogen im Volumen des Grundkörpers verteilt. Der Grundkörper weist dabei ein mit dem Wirkstoff versetztes Kunststoff-Basismaterial auf. Der Wirkstoff kann insbesondere homogen und gleichmäßig mit dem Kunststoff-Basismaterial vermischt und somit quasi im gesamten Volumen des Grundkörpers vorhanden sein.

Der gesamte Grundkörper kann hierdurch eine dauerhafte und langlebige antibakterielle und/oder antimikrobielle Wirkung bereitstellen. Sollten einzelne Oberflächenabschnitte oder -bereiche des Grundkörpers einem Verschleiß, so etwa Abrieb unterliegen, so führt dies nicht zu einer Verschlechterung der antibakteriellen oder antimikrobiellen Eigenschaften. Diese bleiben auch bei starker mechanischer Beanspruchung des Körperkontaktelements und des Grundkörpers wirksam erhalten.

Der Wirkstoff, beispielsweise in Form von Kiefernnadelöl, kann im Herstellungsprozess für den Grundkörper dem in granularer, aufgeschmolzener oder in fließfähiger Form vorliegenden Kunststoff-Basismaterial beigemischt werden, wodurch der Wirkstoff nicht-flüchtig in das Kunststoff-Basismaterial eingebunden werden kann. So kann der Wirkstoff lediglich mit nur einem zusätzlichen Herstellungs- oder Verfahrensschritt im Zuge der Herstellung des Körperkontaktelements mit antibakteriellen und/oder antimikrobiellen Eigenschaften versehen werden. Die Beimischung des antibakteriellen und/oder antimikrobiellen Wirkstoffs im Zuge eines auf Kunststoffverarbeitung basierenden Herstellungsprozesses kann mit vergleichsweise geringem Kosten- oder Herstellungsaufwand verwirklicht werden.

Nach einer weiteren Ausgestaltung enthält der antibakterielle oder antimikrobielle Wirkstoff zumindest ein oder mehrere Monoterpene oder ein oder mehrere Sesquiterpene oder eine hieraus gebildete Mischung. Der Wirkstoff kann insbesondere beides, nämlich Monoterpene und Sesquiterpene beinhalten. Der Wirkstoff kann insbesondere mehrere verschiedene Monoterpene als auch mehrere verschiedene Sesquiterpene aufweisen. Es ist denkbar, dass der Wirkstoff aus einer natürlichen Rohstoffquelle, beispielsweise aus Kiefernholz oder aus Kiefernnadeln gewonnen ist. Bei dem Wirkstoff kann es sich auch um ein ätherisches Öl, beispielsweise um Kiefernnadelöl handeln. Es ist ferner denkbar, dass der Wirkstoff zumindest eines oder eine Kombination der nachfolgenden ätherischen Öle aufweist oder hieraus besteht: Kiefernnadelöl - Pini aetheroleum, Bitterfenchelöl - Foeniculi amari aetheroleum, Süßfenchelöl - Foeniculi dulcis aetheroleum, Korianderöl - Coriandri aetheroleum, Bitterorangenblütenöl - Aurantii amari floris aetheroleum, Lavendelöl - Lavandulae aetheroleum, Salbeiöl - Salviae aetheroleum.

Der Wirkstoff kann ein natürliches ätherisches Öl, aber auch ein synthetisches ätherisches Öl aufweisen. Die Monoterpene oder die Sesquiterpene können synthetisch hergestellt sein. Synthetische oder auch natürliche Monoterpene oder Sesquiterpene können ferner mit weiteren Zusätzen, so zum Beispiel mit Phenylpropanen gestreckt oder versetzt sein.

Nach einer weiteren Ausgestaltung weist der Wirkstoff zumindest einen der folgenden Stoffe oder eine Kombination der nachfolgenden Stoffe auf: α-Pinen, β-Pinen, Δ-Caren, Camphen, Limonen, Myrcen, β-Phellandren, p-Cymen, Terpinol, α-Terpin, γ-Terpin, α-Terpineol, Bornylacetat oder Terpinylacetat. Die Zusammensetzung des Wirkstoffs kann je nach Rohstoffquelle und je nach Verarbeitung eines Rohstoffs variieren.

Nach einer weiteren Ausgestaltung ist der Wirkstoff aus Kiefernnadelöl oder aus Kieferkernholz gewonnen.

Nach einer weiteren Ausgestaltung ist der Grundkörper ein Metallkörper, ein Keramikkörper oder ein Kunststoffkörper. Er kann auch als Verbundwerkstoff ausgestaltet sein, welcher zumindest eines oder eine Kombination der Materialien Keramik, Metall oder Kunststoff aufweist.

Bei Ausgestaltungen in Form eines Kunststoffkörpers oder Kunststoffverbundkörpers kann der antimikrobielle oder antibakterielle Wirkstoff homogen im Grundkörper verteilt sein und gleichermaßen an der Außenoberfläche hiervon vorgesehen oder hierin eingebettet sein. Liegt der Grundkörper zumindest bereichsweise oder gänzlich als Metallkörper oder als Keramikkörper vor, so kann die Außenoberfläche des Metallkörpers oder des Keramikkörpers entweder direkt mit dem antibakteriellen oder antimikrobiellen Wirkstoff versehen, bspw. hierin getränkt oder mit dem Wirkstoff benetzt sein. Andererseits können der Metallkörper oder der Keramikkörper eine den antibakteriellen und/oder antimikrobiellen Wirkstoff enthaltende Beschichtung oder einen entsprechenden Überzug aufweisen.

Nach einer weiteren Ausgestaltung ist der Grundkörper zumindest bereichsweise mit einer Beschichtung oder mit einem Überzug versehen, welche bzw. welcher die Außenoberfläche aufweist oder bildet. Der Grundkörper kann auch vollständig mit der Beschichtung oder mit dem Überzug versehen sein. Das Körperkontaktelement ist bei derartigen Ausgestaltungen als mehrteiliges oder mehrschichtiges Bauteil ausgebildet. Auch wenn der Grundkörper als Kunststoffkörper ausgestaltet ist kann er mit einer Beschichtung oder mit einem Überzug versehen sein, welcher den antibakteriellen und/oder antimikrobiellen Wirkstoff aufweist oder enthält.

So ist insbesondere vorgesehen, dass der antibakterielle und/oder antimikrobielle Wirkstoff homogen in der Beschichtung oder in dem Überzug verteilt ist. Er kann in das Beschichtungsmaterial oder Überzugmaterial eingebettet, darin gelöst oder hierin dispergiert sein. Die Einbettung oder das Versehen der Beschichtung oder des Überzugs mit dem antibakteriellen und/oder antimikrobiellen Wirkstoff ermöglicht es, auch solche Grundkörper mit dem antibakteriellen und/oder antimikrobiellen Wirkstoff zu versehen, die beispielsweise eine besonders glatte Außenfläche aufweisen, die nur bedingt für ein direktes Auftragen des zuvor beschriebenen antibakteriellen und/oder antimikrobiellen Wirkstoffs geeignet ist.

Indem die Beschichtung oder der Überzug den Grundkörper beispielsweise vollständig oder auch nur bereichsweise umschließt kann eine formschlüssige Verbindung von Grundkörper und Beschichtung bzw. Überzug gebildet werden. Die gesamte oder nahezu die gesamte Außenfläche des Grundkörpers kann somit mit einer Beschichtung oder mit einem Überzug versehen sein, in welcher oder an welcher der antibakterielle oder antimikrobielle Wirkstoff enthalten, eingebettet oder angeordnet ist.

Nach einer weiteren Ausgestaltung ist der Grundkörper, die Beschichtung oder der Überzug ein Kunststoffspritzgussbauteil, ein Kunststoff-Extrusionsbauteil, ein Kunststoff-Blasformteil, Kunststoff-Thermoformingbauteil, ein 3-D-Druckbauteil, insbesondere ein Kunststoff-3D-Druckbauteil oder ein Verbundwerkstoff ist. Es ist denkbar, dass die Beschichtung mittels eines Spritzguss-Prozesses den Grundkörper umschließt. So kann der Grundkörper beispielsweise auch als ein mechanisch stabilisierender Einleger für die Beschichtung oder für den Überzug fungieren. Es ist denkbar, dass der Grundkörper und die Beschichtung oder dass der Überzug mittels eines zwei- oder mehrkomponentigen Kunststoff-Spritzgussverfahren hergestellt sind. Der Überzug bzw. die Beschichtung kann auch auf den Grundkörper auflaminiert sein.

In einem ersten Schritt kann hierbei der Grundkörper gespritzt werden. In einem zweiten Schritt kann der Grundkörper zur Bildung der Beschichtung oder des Überzugs umspritzt werden. Gleichermaßen können der Grundkörper als auch die Beschichtung im Zuge eines Extrusionsprozesses gefertigt werden. Gleichermaßen ist denkbar, dass der Grundkörper und/oder die Beschichtung als Kunststoff Blasformteil oder als Kunststoff-3-D-Druckbauteil ausgestaltet sind.

Der Fertigung des Grundkörpers und der Beschichtung bzw. des Überzugs sind herstellungstechnisch kaum Grenzen gesetzt. Der Fertigungsprozess für das Körperkontaktelement ist insbesondere an die Materialeigenschaften des Grundkörpers und/oder der Beschichtung bzw. des Überzugs angepasst.

Nach einer weiteren Ausgestaltung ist insbesondere vorgesehen, dass die Beschichtung oder der Überzug ein mit dem Wirkstoff versetztes Kunststoffmaterial aufweist. Das Körperkontaktelement kann insoweit einen aus einem beliebigen Material gefertigten Grundkörper aufweisen, welcher mit einer Kunststoffbeschichtung oder Kunststoffummantelung versehen oder überzogen ist. In der Kunststoffbeschichtung oder Kunststoffummantelung befindet sich der antibakterielle und/oder antimikrobielle Wirkstoff. Der antibakterielle und/oder antimikrobielle Wirkstoff ist typischerweise homogen in das Kunststoffmaterial der Beschichtung eingebettet oder ist in dieser dispergiert. In der im Kunststoffmaterial gebundenen Form kann der Wirkstoff seine Funktion nach wie vor entfalten.

Nach einer weiteren Ausgestaltung enthält das Kunststoffmaterial der Beschichtung oder des Überzugs und/oder das Kunststoff-Basismaterial des Grundkörpers eines der nachfolgenden Polymere oder eine Kombination der nachfolgenden Polymere: Polyolefine, Polyethylen (PE), Polypropylen (PP), Polyester, Thermoplastische Elastomere (TPE), Thermoplastische Elastomere auf Olefinbasis (TPO), Ethylenvinylacetat Copolymer (EVA), thermoplastische Elastomere auf Urethanbasis (TPU), thermoplastische Vulkanisate (TPV), Acrylnitril-Butadien-Styrol-Copolymere (ABS), Polyamid, Polystyrol oder Polyvinylchlorid (PVC), Silikone z.B. ein Silikonkautschuk.

Jene Polymere zeichnen sich durch einen vergleichsweise niedrigen Schmelzpunkt, typischerweise unterhalb von 200 °C aus. Dies ermöglicht eine besonders einfache fertigungstechnische Verarbeitung und ermöglicht eine kostengünstige sowie fertigungsrationelle Herstellung des Grundkörpers und/oder der Beschichtung bzw. des Überzugs.

Nach einer weiteren Ausgestaltung enthält das Kunststoffmaterial der Beschichtung oder des Überzugs und/oder das Kunststoff-Basismaterial des Grundkörpers eines der nachfolgenden Polymere oder eine Kombination der nachfolgenden Polymere: Polylactide (PLA), Celluloseacetate (CA), Polyhydroxyalkanoate (PHA), Polyhydroxybuttersäuren (PHB), thermoplastische Stärke und Stärkemischungen oder Polytrimethylenterephthalat. Derartige Polymere zeichnen sich durch eine besonders gute Bio-Kompatibilität aus. Sie sind umweltverträglich und biologisch abbaubar.

Nach einer weiteren Ausgestaltung weisen das Kunststoffmaterial der Beschichtung und/oder des Überzugs oder das Kunststoff-Basismaterial des Grundkörpers zumindest einen Füllstoff auf oder ist mit einem entsprechenden Füllstoff versetzt. Der Füllstoff kann einen oder eine Kombination der nachfolgenden Stoffe: Talkum, Zellulose oder Kork aufweisen. Auch können Naturfasern oder mineralische Füllstoffe sowohl dem Kunststoffmaterial der Beschichtung, oder des Überzugs als aus dem Kunststoffbasismaterial des Grundkörpers beigemischt sein. Derartige Füllstoffe ermöglichen es, die mechanischen Eigenschaften des Grundkörpers und/oder der Beschichtung oder des Überzugs bedarfsgerecht an den vorgesehenen Einsatzzweck des Körperkontaktelements anzupassen.

Nach einer weiteren Ausgestaltung enthält die Beschichtung oder der Überzug 0,5 Gew.-% bis 3 Gew.-% Kiefernnadelöl oder 10 Gew.-% bis 70 Gew.-% Kieferkernholz oder 10 Gew.-% bis 50 Gew.-% Kieferkernholz oder 10 Gew.-% bis 30 Gew.-% Kieferkernholz oder 20 Gew.-% bis 70 Gew.-% Kieferkernholz. Besteht der antibakterielle und/oder antimikrobielle Wirkstoff überwiegend aus Kiefernnadelöl, so ist es ausreichend, wenn das Kunststoffmaterial für die Beschichtung oder für den Überzug 0,5 Gew.-% bis 3 Gew.-% Kiefernnadelöl enthält. Besteht der antibakterielle und/oder antimikrobielle Wirkstoff überwiegend aus Kieferkernholz, sollte der Wirkstoffanteil für die Beschichtung oder für den Überzug zumindest 10 Gew.-% Kieferkernholz, zumindest 20 Gew.-% Kieferkernholz, zumindest 30 Gew.-% Kieferkernholz, zumindest 40 Gew.-% Kieferkernholz zumindest 50 Gew.-% Kieferkernholz bis maximal 70 Gew.-% Kieferkernholz an der Beschichtung oder an dem Überzug betragen.

Insoweit und nach einer weiteren Ausgestaltung kann die Beschichtung oder der Überzug einen Polymeranteil von 30 Gew.-% bis 99,5 Gew.-%, einen Polymeranteil von 30 Gew.-% bis 70 Gew.-% oder einen Polymeranteil von 45 bis 99,5 Gew.-% aufweisen. Weist der antibakterielle und/oder antimikrobielle Wirkstoff überwiegend Kiefernnadelöl auf, so kann der Polymeranteil der Beschichtung oder des Überzugs mehr als 70 Gew.-%, mehr als 80 Gew.-%, mehr als 90 Gew.-% oder mehr als 95 Gew.-% betragen. Weist der antibakterielle und/oder antimikrobielle Wirkstoff überwiegend Kieferkernholz auf, so kann der Polymeranteil der Beschichtung oder des Überzugs weniger als 90 Gew.-%, weniger als 80 Gew.-%, weniger als 70 Gew.-%, weniger als 60 Gew.-%, weniger als 50 Gew.-%, weniger als 45 Gew.-% oder sogar weniger als 40 Gew.-% betragen.

Die konkrete Zusammensetzung der Kunststoffbeschichtung oder des Kunststoffüberzugs ist dem konkreten Verwendungszweck des Körperkontaktelements angepasst.

Der antibakterielle oder antimikrobielle Wirkstoff kann Kieferkernholz aufweisen oder hieraus zumindest teilweise gebildet sein. Das Kieferkernholz kann in Faserform, als Holzspäne oder als Holzmehl im Grundkörper und/oder in der Beschichtung oder im Überzug vorgesehen sein. Durch Beimischung von Kieferkernholz, beispielsweise in das Kunststoffmaterial oder das Kunststoff-Basismaterial kann der Anteil weiterer antimikrobieller und/oder antibakterieller Wirkstoffe reduziert werden. Der antibakterielle und/oder antimikrobielle Wirkstoff kann auch annähernd vollständig oder sogar ausschließlich in Form von Holz oder Holzfasern vorliegen und in einer fasergebundenen Form mit dem Kunststoffmaterial oder Kunststoff-Basismaterial homogen vermischt sein.

Nach einer weiteren Ausgestaltung beträgt die Dicke der Beschichtung oder des Überzugs zwischen 0,5 mm und 6 mm. Die Dicke kann zwischen 1 mm und 5 mm betragen. Sie kann auch zwischen 2 mm und 4 mm liegen. Die Dicke der Beschichtung oder des Überzugs hängt auch hier von der mechanischen Beanspruchung des Körperkontaktelements ab.

Nach einer weiteren Ausgestaltung weist das Kunststoffmaterial für die Beschichtung oder den Überzug zumindest ein Plastomer, ein Elastomer oder ein Duromer oder ein hieraus gebildetes Gemisch auf. Als Plastomere kommen insbesondere thermoplastische Materialien, das heißt nicht vernetzte Polymere infrage, welche wiederholt einschmelzbar sind. Das Kunststoff-Basismaterial kann insoweit Polyolefine, so z.B. Polyethylen und/oder Polypropylen aufweisen. Die Beschichtung oder der Überzug können beispielsweise in Form einer Folie vorliegen. Diese kann beispielsweise eine Stärke bis 1 mm aufweisen. Das Folien-Kunststoffmaterial kann dabei zum Beispiel 1 bis 10 Gew.-% des antibakteriellen und/oder antimikrobiellen Wirkstoffs sowie 90 bis 99 Gew.-% eines Plastomers, so zum Beispiel ein Polyethylen, beispielsweise ein hochdichtes Polyethylen (HDPE) aufweisen. Die Folie kann dabei nach einer Folienblastechnik hergestellt sein. Das Körperkontaktelement kann demgemäß zumindest bereichsweise oder auch vollständig mit einem Folienüberzug versehen sein.

Nach einer weiteren Ausgestaltung weist das Material für die Beschichtung oder den Überzug ein oder mehrere Duromere bzw. Duroplaste auf. Hierbei handelt es sich um weitreichend vernetzte Polymere, die in klassischem Sinne nicht aufschmelzbar sind. Erfindungsgemäße antibakterielle und/oder antimikrobielle Kunststoffmaterialien auf Basis eines Plastomers oder eines Elastomers sind bei Zimmertemperatur zumeist fest und liegen demgemäß als Festkörper vor. Bei Duromeren als Kunststoffmaterial kann das antibakterielle und/oder antimikrobielle Kunststoffmaterial auch in flüssiger Form oder in einem zähflüssigen Zustand vorliegen.

Das antibakterielle und/oder antimikrobielle Kunststoffmaterial kann dabei insbesondere für eine Oberflächenversiegelung von Grundkörpern verwendet werden, die beispielsweise aus Metall oder aus Keramik gefertigt sind oder an ihrer Außenseite Metall- oder Keramikbereiche aufweisen. Das mit dem antibakteriellen oder antimikrobiellen Wirkstoff versetzte Beschichtungs- oder Überzugsmaterial kann sprühfähig sein. Es kann beispielsweise in Form eines Sprays und mittels Sprühens auf die Außenfläche des Grundkörpers aufgebracht werden.

Nach einer weiteren Ausgestaltung kann das antibakterielle und/oder antimikrobielle Kunststoffmaterial in ein granulares Masterbatch-Material integriert oder dispergiert sein, welches als Ausgangsstoff für den Grundkörper und/oder für die Beschichtung oder den Überzug fungiert. Typischerweise ist das mit dem Wirkstoff versehene antibakterielle und/oder antimikrobielle Kunststoffmaterial bei Zimmertemperatur fest. Das Kunststoffmaterial kann bei Zimmertemperatur eine feste und spröde Konsistenz aufweisen. Je nach stofflicher Zusammensetzung des Kunststoff-Basismaterials für den Grundkörper und der Zusammensetzung eines optionalen Kunststoffmaterials für die Beschichtung, respektive Überzug, sowie je nach Anteil und mechanischer Beschaffenheit des Wirkstoffs kann das antibakterielle und/oder antimikrobielle Kunststoffmaterial auch bei Zimmertemperatur fließfähig oder zähflüssig, zumindest aber elastisch oder plastisch deformierbar sein.

Nach einer weiteren Ausgestaltung ist der Wirkstoff dem Kunststoff-Basismaterial für den Grundkörper und/oder dem Kunststoffmaterial für die Beschichtung, respektive Überzug beigemischt, wobei sich das Kunststoff-Basismaterial oder das Kunststoffmaterial in einem aufgeschmolzenen Zustand befindet. Der Wirkstoff ist weitreichend homogen im Kunststoff-Basismaterial oder Kunststoffmaterial dispergiert. Typischerweise ist der Wirkstoff unlöslich im Kunststoff-Basismaterial eingebettet. Durch ein Beimischen des Wirkstoffs in eine Schmelze des Kunststoff-Basismaterials oder des Kunststoffmaterials kann eine besonders homogene Durchmischung sowie homogene Verteilung des Wirkstoffs im Volumen des hierdurch hergestellten Grundkörpers, der Beschichtung oder des Überzugs bereitgestellt werden. Zudem können etwaige, z.B. bei Zimmertemperatur leicht flüchtige Bestandteile des Wirkstoffs auf diese Art und Weise dauerhaft im Kunststoffmaterial gebunden werden.

Nach einer weiteren Ausgestaltung kann das Kunststoffmaterial oder das Kunststoff-Basismaterial im Wesentlichen faserfrei sein. Es ist insbesondere frei von Naturfasern wie zum Beispiel Cellulose- oder Holzfasern. Hierbei ist insbesondere vorgesehen, dass der Wirkstoff faserfrei ist. Ein faserfreier Wirkstoff eignet sich besonders gut für eine homogene Durchmischung mit dem Kunststoff-Basismaterial oder Kunststoffmaterial.

Auch ist nach einer weiteren Ausführungsform vorgesehen, dass der Wirkstoff bei Zimmertemperatur pastös, fließfähig oder flüssig ist. Ein pastöser, fließfähiger oder flüssiger Wirkstoff eignet sich besonders gut für eine homogene Durchmischung mit dem Kunststoff-Basismaterial. Ferner kann der Wirkstoff hinsichtlich seiner antibakteriell oder antimikrobiell wirkenden Bestandteile und Essenzen hochkonzentriert sein. Die Zugabe des Wirkstoffs zum Kunststoff-Basismaterial in pastöser, fließfähiger oder flüssiger Form führt somit zu einer langanhaltenden antibakteriellen oder antimikrobiellen Wirkung des Kunststoffmaterials, bzw. des Kunststoff-Basismaterials und der hieraus gebildeten Gegenstände und Objekte.

Nach einer weiteren Ausgestaltung ist das Körperkontaktelement oder das Hautkontaktelement als Griff oder Griffelement, als Türgriff oder als Fenstergriff, als Türklinke, als Toilettensitz oder Toilettenbrille, als Toilettendeckel, als Sanitärarmatur, als Geländer-Handlauf, als Lenkrad, als Schalthebel, als Lichtschalter, als Toilettenspülknopf, als Handtuchhalter, als Tischdecke als Sitzbezug als Armlehne oder als Schreibgerät ausgebildet. Das Körperkontaktelement kann insoweit ein Türgriff, ein Fenstergriff, eine Türklinke, ein Toilettensitz, eine Toilettenbrille, ein Toilettendeckel, eine Sanitärarmatur, ein Geländer-Handlauf, ein Lichtschalter, ein Toilettenspülknopf, ein Handtuchhalter, eine Tischdecke, ein Sitzbezug oder eine Armlehne sein.

Nach einem weiteren Aspekt betrifft die Erfindung einen Tür- oder Fenstergriff, welcher einen Grundkörper und eine Außenoberfläche aufweist, wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

Nach einem weiteren Aspekt betrifft die Erfindung einen Toilettensitz, eine Toilettenbrille, einen Toilettendeckel oder eine Toilettenbürste, welcher bzw. welche einen Grundkörper und eine Außenoberfläche aufweist, wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

Nach einem weiteren Aspekt betrifft die Erfindung eine Sanitärarmatur, wie zum Beispiel einen Wasserhahn oder eine Mischbatterie, welcher bzw. welche einen Grundkörper und eine Außenoberfläche aufweist, wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

Nach einem weiteren Aspekt betrifft die Erfindung einen Geländer-Handlauf, welcher einen Grundkörper und eine Außenoberfläche aufweist, wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

Nach einem weiteren Aspekt betrifft die Erfindung einen Lichtschalter, welcher einen Grundkörper und eine Außenoberfläche aufweist, wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

Nach einem weiteren Aspekt betrifft die Erfindung einen Toiletten-Spülknopf, welcher einen Grundkörper und eine Außenoberfläche aufweist, wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

Nach einem weiteren Aspekt betrifft die Erfindung einen Handtuchhalter, welcher einen Grundkörper und eine Außenoberfläche aufweist, wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

Nach einem weiteren Aspekt betrifft die Erfindung eine Tischdecke, einen Sitzbezug oder eine Armlehne, welcher bzw. welche einen Grundkörper und eine Außenoberfläche aufweist, wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

Nach einem weiteren Aspekt betrifft die Erfindung ganz allgemein verschiedene Griffe oder Griffelement, wie z.B. einen Einkaufswagengriff, ein Lenkrad, einen Schaltehebel, welcher bzw. welche einen Grundkörper und eine Außenoberfläche aufweist bzw. aufweisen, wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

Nach einem weiteren Aspekt betrifft die Erfindung ein Schreibgerät, wie z.B. einen Kugelschreiber, Füller oder Tintenroller, welcher einen Grundkörper und eine Außenoberfläche aufweist, wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

### Kurzbeschreibung der Figuren

Weitere Ziele, Vorteile, Eigenschaften sowie vorteilhafte Anwendungsmöglichkeiten des Köperkontaktelements mit antibakterieller und/oder antimikrobieller Wirkung werden in der nachfolgenden Beschreibung eines Ausführungsbeispiels unter Bezugnahme auf die Figuren erläutert. Hierbei zeigen:
- Fig. 1: ein Ausführungsbeispiel eines Körperkontaktelements in Form eines Toilettensitzes,
- Fig. 2: ein weiteres Ausführungsbeispiel eines Körperkontaktelements in Form eines Türgriffs,
- Fig. 3: ein weiteres Ausführungsbeispiel eines Körperkontaktelements in Form eines Handlaufs eines Geländers,
- Fig.4: ein weiteres Ausführungsbeispiel eines Körperkontaktelements in Form eines Lichtschalter,
- Fig. 5: einen exemplarischen Querschnitt A-A gemäß Fig. 1,
- Fig. 6: einen exemplarischen Querschnitt B-B gemäß Fig. 2.

### Detaillierte Beschreibung

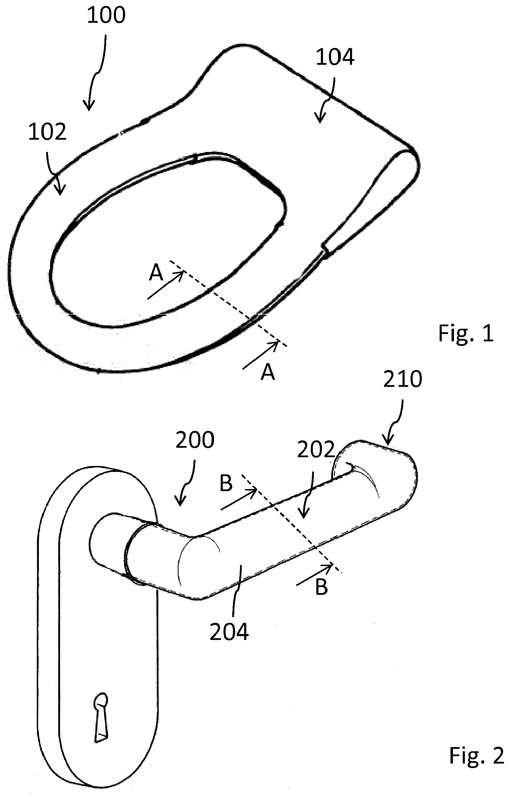

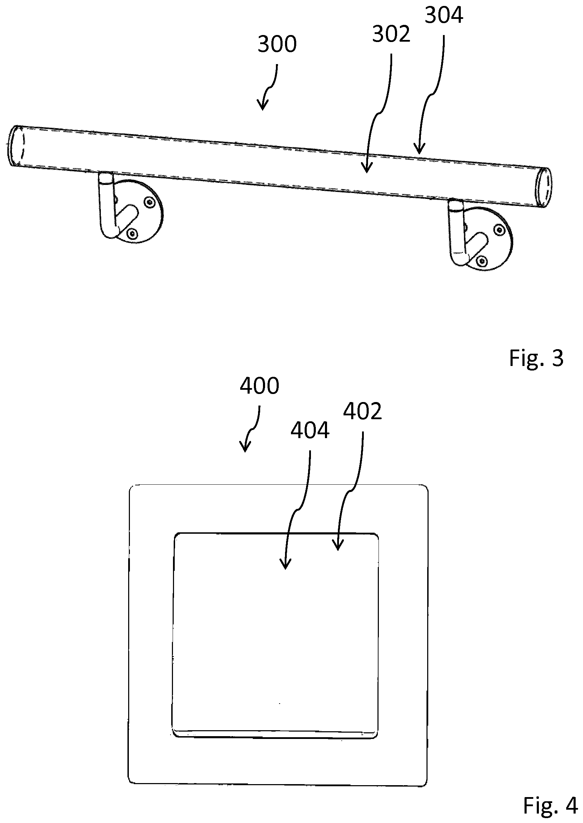

In den Figuren 1 bis 4 sind unterschiedliche Körperkontaktelemente 100, 200, 300, 400 gezeigt. Die Körperkontaktelemente 100, 200, 300, 400 weisen jeweils einen Grundkörper 102, 202, 302, 402 mit einer Außenoberfläche 104, 204, 304, 404 auf. An oder in der Außenoberfläche 104, 204, 304, 404 ist ein antibakterieller und/oder antimikrobieller Wirkstoff vorhanden. Dieser enthält zumindest einen Bestandteil oder eine Kombination von Bestandteilen aus zumindest einem der nachfolgenden Stoffe oder Stoffgruppen: Stilbene, Flavonoide, Lignane, Harzsäuren oder Terpene.

Ein derartiger antibakterieller und/oder antimikrobieller Wirkstoff zeichnet sich durch eine besonders gute keimabtötende Wirkung aus. Solche Wirkstoffe weisen zudem ein hohes Maß an Biokompatibilität und Umweltverträglichkeit auf. Sie sind zudem gesundheitlich unbedenklich.

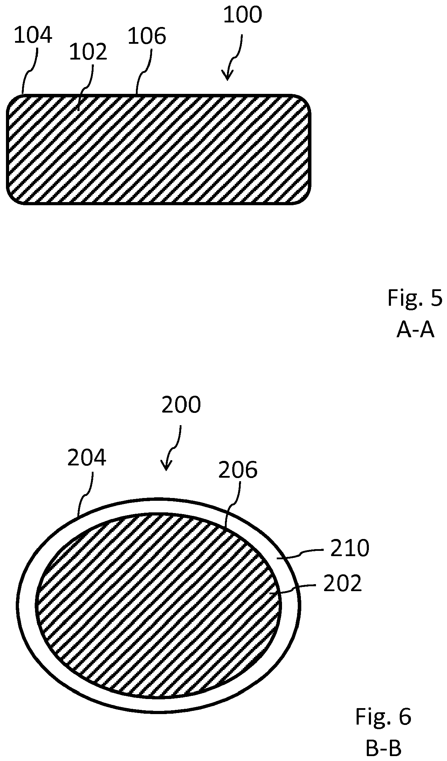

Das Körperkontaktelement 100, gemäß Fig. 1, welches als Toilettensitz oder als Toilettenbrille ausgestaltet ist, kann ein einkomponentiges oder einstückiges Kunststoff-Spritzgussbauteil aufweisen, wie dies aus dem Querschnitt gemäß Fig. 5 hervorgeht. Der antibakterielle und/oder antimikrobielle Wirkstoff ist hierbei homogen im Volumen des Grundkörpers 102 verteilt. Eine Kunststoffrohmasse und/oder ein Kunststoffgranulat, aus welchem der Toilettensitz oder die Toilettenbrille herstellbar ist bzw. sind kann beispielsweise mit dem antibakteriellen und/oder antimikrobiellen Wirkstoff versetzt sein. Wenn der Wirkstoff homogen im Grundkörper verteilt ist befindet er sich natürlich auch an dessen Außenfläche 106. Sollte die Außenfläche 106 etwa infolge Reibung eine gewisse Abnutzung aufweisen, so hat dies keinerlei Nachteile auf die antibakterielle oder antimikrobielle Wirkung des Grundkörpers 102.

Die Außenfläche 106 des Grundkörpers 102 fällt hierbei mit der Außenoberfläche 104 des Körperkontaktelements 100 zusammen. Der Grundkörper 102 weist typischerweise ein zuvor beschriebenes Kunststoff-Basismaterial auf. Mithin kann der Grundkörper vollständig aus dem Kunststoff-Basismaterial gefertigt sein.

Das Körperkontaktelement 200 in Form eines Türgriffs gemäß Fig. 2 ist im Querschnitt der Fig. 6 näher gezeigt. Anders als das Körperkontaktelement 100 ist das Körperkontaktelement 200 aus zumindest zwei Komponenten aufgebaut. Es weist einen Grundkörper 200 aus einem beliebigen Werkstoff, beispielsweise aus einem Kunststoff, einem Metall oder aus einer Keramik auf. Die Außenfläche 206 des Grundkörpers 202 fällt hierbei nicht mit der Außenoberfläche 204 des Körperkontaktelements 200 zusammen. Vielmehr ist die Außenfläche 206 des Grundkörpers 202 mit einer Beschichtung 210 versehen. Eine dem Grundkörper 202 abgewandte Seite der Beschichtung 210 bildet hierbei die Außenoberfläche 202 des Körperkontaktelements 200.

Die Beschichtung 210 kann gleichermaßen als Überzug ausgestaltet sein. Sie kann den Grundkörper 202 vollständig oder auch nur bereichsweise überziehen. Infolge Abnutzung kann die Beschichtung 210 womöglich auch ausgetauscht oder ersetzt werden. Sie kann stoffschlüssig, alternativ oder ergänzend hierzu auch formschlüssig mit dem Grundkörper lösbar oder dauerhaft verbunden sein. Die Beschichtung 210 weist typischerweise ein zuvor beschriebenes Kunststoffmaterial auf, welches mit einem zuvor beschriebenen antibakteriellen und/oder antimikrobiellen Wirkstoff versetzt ist. Die Beschichtung kann eine Dicke von weniger als 1 mm, weniger als 500 µm oder auch weniger als 300 µm aufweisen. Die Beschichtung kann ferner auch eine Dicke von mehr als 1 mm, mehr als 2 mm, mehr als 3 mm oder mehr als 5 mm aufweisen.

Die Beschichtung oder der Überzug können je nach Wahl und Zusammensetzung des die Beschichtung bzw. den Überzug bildenden Kunststoffmaterials, etwa durch Beimischung von Farbsegmenten eine beliebige vorbestimmte Farbe aufweisen.

Ferner kann durch ein Variieren der Polymerkomponenten des Kunststoffmaterials die haptischen oder optischen Eigenschaften der Beschichtung des Überzugs variabel verändert werden.

Je nach vorgesehenem Einsatzzweck kann die Beschichtung oder der Überzug für das Körperkontaktelement 100, 200, 300, 400 unterschiedliche Anteile oder Bestandteile an Polymeren und antibakteriellen bzw. antimikrobiellen Wirkstoffen aufweisen. Für Ausgestaltungen des Körperkontaktelements 200 in Form von Tür- oder Fenstergriffen ist für den Überzug oder die Beschichtung ein Polymeranteil, beispielsweise in Form von Polypropylen oder Polyethylen, zwischen 45 Gew.-% und 75 Gew.-% vorgesehen. Der antibakterielle und/oder antimikrobielle Wirkstoff kann in Form von Kieferkernholz, z.B. mit einem Anteil von 20 Gew.-% bis 50 Gew.-% vorliegen. Das Beschichtungs- oder Überzugmaterial kann ferner bis zu 5 % Talkum sowie 1 Gew.-% bis 5 Gew.-% eines Haftvermittlers aufweisen.

Für weitere Ausgestaltungen als Tür- oder Fenstergriff können die Beschichtung oder der Überzug bis zu 50 Gew.-% Kieferkernholz und bis zu 50 Gew.-% PLA aufweisen. Nach einer weiteren Ausgestaltung als Tür- oder Fenstergriff können die Beschichtung oder der Überzug bis zu 2.5 Gew.-% Kiefernnadelöl und bis zu 97.5 Gew.-% PLA aufweisen. Ferner kann ein Master-Batch Material für die Fertigung von Tür- oder Fenstergriffen bis zu 20 Gew.-% Kiefernnadelöl enthalten, wobei das Master-Batch Material einen Anteil von bis 5 Gew.-% im fertigen Endprodukt aufweist. Der Rest der Beschichtung oder des Überzugs kann bis zu 95 Gew.-% PLA aufweisen.

Für Ausgestaltungen des Körperkontaktelements 100 in Form eines Toilettensitzes, einer Toilettenbrille oder eines Toilettendeckels ist für den Überzug oder für die Beschichtung ein Polymeranteil, beispielsweise in Form von Polypropylen, zwischen 97 Gew.-% und 99,5 Gew.-% vorgesehen. Der antibakterielle und/oder antimikrobielle Wirkstoff kann z.B. in Form von Kiefernnadelöl mit einem Anteil von 0.5 Gew.-% bis 3 Gew.-% vorliegen. Das Beschichtungs- oder Überzugsmaterial kann frei von Talkum und/oder frei von einem Haftvermittler sein.

Für Ausgestaltungen des Körperkontaktelements in Form einer Toilettenbürste ist für den Überzug oder für die Beschichtung ein Polymeranteil, beispielsweise in Form von Polylactiden (PLA) zwischen 50 Gew.-% und 80 Gew.-% vorgesehen. Der antibakterielle und/oder antimikrobielle Wirkstoff kann z.B. in Form von Kieferkernholz mit einem Anteil von 20 Gew.-% bis 50 Gew.-% vorliegen.

Für Ausgestaltungen des Körperkontaktelements 300 in Form eines Handlaufs ist für den Überzug oder für die Beschichtung ein Polymeranteil, beispielsweise in Form von Polylactiden zwischen 97 Gew.-% und 99,5 Gew.-% vorgesehen. Der antibakterielle und/oder antimikrobielle Wirkstoff kann z.B. in Form von Kiefernnadelöl mit einem Anteil von 0.5 Gew.-% bis 3 Gew.-% vorliegen. Das Beschichtungs- oder Überzugmaterial kann frei von Talkum oder frei von einem Haftvermittler sein.

Des Weiteren und nach einer weiteren Ausgestaltung kann die Beschichting oder der Überzug für einen Geländer-Handlauf 1 Gew.-% Kiefernnadelöl und bis 99 Gew.-% HDPE aufweisen. Ferner kann ein Master-Batch Material für die Fertigung von Beschichtungen oder Überzügen bis zu 20 Gew.-% Kiefernnadelöl enthalten, wobei das Master-Batch Material einen Anteil von bis 5 Gew.-% im fertigen Endprodukt aufweist. Der Rest der Beschichtung oder des Überzugs kann bis zu 95 Gew.-% HDPE aufweisen. Weiter alternativ kann die Beschichtung oder der Überzug bis zu 0.3 Gew.-% Stilbene und Flavonide und bis zu 99,7 Gew.-% HDPE aufweisen.

Für Ausgestaltungen des Körperkontaktelements 400 in Form eines Lichtschalters ist für den Überzug oder für die Beschichtung ein Polymeranteil, beispielsweise in Form von Polypropylen oder Polyethylen zwischen 30 Gew.-% und 80 Gew.-% vorgesehen. Der antibakterielle und/oder antimikrobielle Wirkstoff kann z.B. in Form von Kiefernnadelöl mit einem Anteil von 0.5 Gew.-% bis 3 Gew.-% vorliegen. Das Beschichtungs- oder Überzugsmaterial kann ferner als Füllstoff 10 Gew.-% bis 50 Gew.-% Zellulose sowie 1 Gew-% bis 5 Gew.-% eines Haftvermittlers aufweisen.

Wenn das Körperkontaktelement z.B. als Toilettenspülknopf ausgestaltet ist, kann der Überzug oder die Beschichtung einen Polymeranteil, beispielsweise in Form von Polystyrol zwischen 50 Gew.-% und 80 Gew.-% aufweisen. Der antibakterielle und/oder antimikrobielle Wirkstoff kann z.B. in Form von Kieferkernholz mit einem Anteil von 20 Gew.-% bis 50 Gew.-% vorliegen. Ferner kann die Beschichtung oder der Überzug 1 Gew% bis 5 Gew % eines Haftvermittler aufweisen.

Wenn das Körperkontaktelement z.B. als Handtuchhalter ausgestaltet ist, kann der Überzug oder die Beschichtung einen Polymeranteil, beispielsweise in Form von Polystyrol zwischen 50 Gew.-% und 80 Gew.-% aufweisen. Der antibakterielle und/oder antimikrobielle Wirkstoff kann z.B. in Form von Kiefernnadelöl mit einem Anteil von 0.5 Gew.-% bis 3 Gew.-% in der Beschichtung vorliegen. Ferner kann die Beschichtung oder der Überzug 1 Gew% bis 5 Gew % eines Haftvermittler aufweisen.

Andere Ausgestaltungen eines Handtuchhalters sehen für das Körperkontaktelement eine Beschichtung mit einem Polymeranteil, beispielsweise in Form von Polyamid PA12 zwischen 49 Gew.-% und 54 Gew.-% auf. Der antibakterielle und/oder antimikrobielle Wirkstoff kann z.B. in Form von Kieferkernholz mit einem Anteil von 20 Gew.-% bis 50 Gew.-% vorliegen. Ferner kann die Beschichtung oder der Überzug 1 Gew% bis 5 Gew % eines Haftvermittler aufweisen.

Generell kann für sämtliche Beschichtungen anstelle eines Kieferkernholzanteils von von 20 Gew.-% bis 50 Gew.-% ein Kiefernnadelölanteil von 0.5 Gew.-% bis 3 Gew.-%, und umgekehrt vorgesehen sein. Der Polymeranteil der Beschichtung ist dementsprechend anzupassen. So kann ein als Handtuchhalter ausgestaltetes Körperkontaktelement einen Polymeranteil, beispielsweise in Form von Polyamid PA12 zwischen 97 Gew.-% und 97,5 Gew.-% und einen Kiefernnadelölanteil von 0.5 Gew.-% bis 3 Gew.-% aufweisen.

Für Ausgestaltungen des Körperkontaktelements als Tischdecke, Sitzbezug oder als Armlehne können die Beschichtung oder der Überzug einen Polymeranteil, beispielsweise in Form von EVA oder LDPE zwischen 30 Gew.-% und 70 Gew.-% aufweisen. Der antibakterielle und/oder antimikrobielle Wirkstoff kann z.B. in Form von Kieferkernholz mit einem Anteil von 10 Gew.-% bis 30 Gew.-% hierin enthalten sein. Des Weiteren kann der Überzug oder die Beschichtung einen Kork-Füllstoff mit einem Anteil von 10 Gew.-% bis 20 Gew.-% aufweisen.

Alternativ hierzu kann die Beschichtung oder der Überzug für eine Tischdecke, einen Sitzbezug oder eine Armlehne einen Polymeranteil, beispielsweise in Form von EVA oder LDPE zwischen 97 Gew.-% und 99,5 Gew.-% aufweisen, wobei der antibakterielle und/oder antimikrobielle Wirkstoff z.B. in Form von Kiefernnadelöl mit einem Anteil von 0,5 Gew.-% bis 3 Gew.-% hierin enthalten sein kann.

Die Beschichting oder der Überzug können unabhängig von einer konkreten Verwendung mit einem Grundkörper bis zu 20 Gew.-% Kieferkernholz und bis zu 80 Gew.-% Polyolefine EVA aufweisen. Nach einer weiteren Ausgestalteung als flexible Folie kann die Beschichtung oder der Überzug bis zu 1 Gew.-% Kiefernnadelöl und bis 99 Gew.-% Polyolefine und z.B. EVA aufweisen. Die Folie kann dabei auf einem LDPE oder EVA oder einer Mischung hieraus beruhen.

Ferner kann ein Master-Batch Material für die Fertigung von Folien bis zu 20 Gew.-% Kiefernnadelöl enthalten, wobei das Master-Batch Material einen Anteil von bis 5 Gew.-% im fertigen Endprodukt aufweist. Der Rest der Beschichtung oder des Überzugs kann bis zu 95 Gew.-% Polyolefine und z.B. EVA aufweisen. Weiter alternativ kann die Folie bis zu 0.3 Gew.-% Stilbene und Flavonide und bis zu 99,7 Gew.-% Polyolefine und z.B. EVA aufweisen.

### Bezugszeichenliste

- 100: Körperkontakteelement
- 102: Grundkörper
- 104: Außenoberfläche
- 106: Außenfläche
- 200: Körperkontakteelement
- 202: Grundkörper
- 204: Außenoberfläche
- 206: Außenfläche
- 210: Beschichtung / Überzug
- 300: Körperkontakteelement
- 302: Grundkörper
- 304: Außenoberfläche
- 400: Körperkontakteelement
- 402: Grundkörper
- 404: Außenoberfläche

## Patentansprüche

1. Körperkontaktelement mit einem Grundkörper (102; 202; 302; 402) und einer Außenoberfläche (104; 204; 304; 404), wobei die Außenoberfläche mit einem antibakteriellen und/oder antimikrobiellen Wirkstoff versehen ist, welcher zumindest einen Bestandteil oder eine Kombination von Bestandteilen aus zumindest einer der nachfolgenden Stoffe oder Stoffgruppen: Stilbene, Flavonoide, Lignane, Harzsäuren oder Terpene enthält.

2. Körperkontaktelement nach Anspruch 1, wobei der Wirkstoff Kiefernnadelöl und/oder Kieferkernholz enthält oder hieraus gebildet ist.

3. Körperkontaktelement nach einem der vorhergehenden Ansprüche, wobei die Außenoberfläche (104; 204; 304; 404) eine Außenfläche (106) des Grundkörpers (102; 204; 304; 404) ist oder die Außenfläche des Grundkörpers (102; 202; 302; 402) bildet.

4. Körperkontaktelement nach einem der vorhergehenden Ansprüche, wobei der Wirkstoff homogen im Volumen des Grundkörpers (102; 202; 302; 402) verteilt ist und wobei der Grundkörper (102; 202; 302; 402) ein mit dem Wirkstoff versetztes Kunststoff-Basismaterial aufweist.

5. Körperkontaktelement nach einem der vorhergehenden Ansprüche 1 bis 4, wobei der Grundkörper (102; 202; 302; 402) ein Metallkörper, ein Keramikkörper, ein Kunststoffkörper oder ein Verbundwerkstoff ist, welcher eine Kombination der Materialien Keramik, Metall, oder Kunststoff aufweist.

6. Körperkontaktelement nach einem der vorhergehenden Ansprüche, wobei der Grundkörper (202) zumindest bereichsweise mit einer Beschichtung (210) oder mit einem Überzug versehen ist, welcher die Außenoberfläche (204) aufweist oder bildet.

7. Körperkontaktelement nach einem der vorhergehenden Ansprüche, wobei der Grundkörper (102; 202; 302; 402), die Beschichtung (210) oder der Überzug ein Kunststoffspritzgussbauteil, ein Kunststoff-Extrusionsbauteil, ein Kunststoff-Thermoformingbauteil, ein Kunststoff-Blasformteil, ein 3-D-Druckbauteil oder ein Verbundwerkstoff ist bzw. sind.

8. Körperkontaktelement nach Anspruch 7, wobei die Beschichtung (210) oder der Überzug ein mit dem Wirkstoff versetztes Kunststoffmaterial aufweist.

9. Körperkontaktelement nach einem der vorhergehenden Ansprüche 4 bis 8, wobei das Kunststoffmaterial oder das Kunststoff-Basismaterial zumindest eines oder eine Kombination der nachfolgenden Polymere: Polyolefine, Polyethylen (PE), Polypropylen (PP), Polyester, Thermoplastische Elastomere (TPE), Thermoplastische Elastomere auf Olefinbasis (TPO), Ethylenvinylacetat Copolymer (EVA), thermoplastische Elastomere auf Urethanbasis (TPU), thermoplastische Vulkanisate (TPV), Acrylnitril-Butadien-Styrol-Copolymere (ABS), Polyamid, Polystyrol oder Polyvinylchlorid (PVC), Silikone oder Silikonkautschuk.

10. Körperkontaktelement nach einem der vorhergehenden Ansprüche 4 bis 9, wobei das Kunststoffmaterial oder das Kunststoff-Basismaterial zumindest eines oder eine Kombination der nachfolgenden Polymere: Polylactide (PLA), Celluloseacetate (CA), Polyhydroxyalkanoate (PHA), Polyhydroxybuttersäuren (PHB), thermoplastische Stärke und Stärkemischungen oder Polytrimethylenterephthalat enthält.

11. Körperkontaktelement nach einem der vorhergehenden Ansprüche, wobei das Kunststoffmaterial oder das Kunststoff-Basismaterial mit zumindest einem Füllstoff versetzt ist, welcher einen oder eine Kombination der nachfolgenden Stoffe: Talkum, Zellulose oder Kork aufweist.

12. Körperkontaktelement nach einem der vorhergehenden Ansprüche 7 bis 11, wobei die Beschichtung (210) oder der Überzug 0,5 Gew.-% bis 3 Gew.-% Kiefernnadelöl oder 10 Gew.-% bis 50 Gew.-% Kieferkernholz oder 10 Gew.-% bis 30 Gew.-% Kieferkernholz oder 20 Gew.-% bis 50 Gew.-% Kieferkernholz enthält.

13. Körperkontaktelement nach einem der vorhergehenden Ansprüche 7 bis 12 wobei die Beschichtung (210) oder der Überzug einem Polymeranteil von 30 bis 99,5 Gew.-%, einen Polymeranteil von 30 bis 70 Gew.-% oder einen Polymeranteil von 45 bis 99, 5 Gew.-% enthält.

14. Körperkontaktelement nach einem der vorhergehenden Ansprüche 7 bis 13, wobei die Beschichtung eine Dicke von 0,5 mm bis 6 mm, eine Dicke von 1 mm bis 5 mm oder eine Dicke von 2 mm bis 4 mm aufweist.

15. Körperkontaktelement nach einem der vorhergehenden Ansprüche, welches als Türgriff oder Fenstergriff, als Türklinke, als Toilettensitz oder Toilettenbrille, als Toilettendeckel, als Toilettenbürste, als Sanitärarmatur, als Griff, als Einkaufswagengriff, Geländer-Handlauf, als Lichtschalter, als Toilettenspülknopf, als Handtuchhalter, als Tischdecke als Sitzbezug, als Lenkrad, als Schalthebel, als Schreibgerät oder als Armlehne ausgebildet ist.
